# EUROPEAN PATENT APPLICATION

(11) **EP 4 531 124 A1**
(43) Date of publication of application: **02.04.2025**
(21) Application number: 23200384.8
(22) Date of filing: 28.09.2023
(51) Int. Cl.: H01M 4/04, H01M 4/13, H01M 4/134, H01M 4/139, H01M 4/1395

(54) **METHOD OF OBTAINING A METALATED ELECTRODE**

(71) Applicant: CUSTOMCELLS Holding GmbH, 25524 Itzehoe (DE)
(72) Inventor: Otepov, Sultan, Itzehoe (DE)
(74) Representative: LKGLOBAL Lorenz & Kopf Patentanwalt Attorney at Law PartG mbB

(57) **Abstract**

The invention relates to a method (100) of obtaining a metalated electrode for an energy storage device.

The method comprises providing a layer assembly.

The layer assembly comprises:
• an electrode (e.g. an electrode foil),
• a first separator layer on top of the electrode, the first separator layer comprising a first separator, and
• a first source layer on top of the first separator layer, the first source layer comprising a first metal.

The electrode is electrically conductive and comprises a first electrode material being electrically conductive and being different from the first metal.

The first separator is permeable for metal ions of the first metal.

The first source layer is electrically conductive.

The method further comprises electrically connecting the first source layer to the electrode by means of a first current control unit,

The method further comprises providing an agent comprising a solvent and metal ions of the first metal, the metal ions being dissociated in the solvent, and metalating the electrode.

The electrode is metalated by:
• causing a flow of metal ions of the first metal into the electrode by exposing the layer assembly to the agent,
• while controlling an electrical current between the first source layer and the electrode by means of the first current control unit.

The method further comprises removing the metalated electrode from the agent.

## Description

### FIELD OF THE DISCLOSURE

The present disclosure relates to a method of obtaining a metalated electrode for an energy storage device.

### BACKGROUND

Batteries play a critical role in modern society, powering a wide range of devices from portable electronics to electric vehicles. Rechargeable batteries, also referred to as secondary batteries, are often preferred due to their reusability.

The increasing demand for portable electronics and electric vehicles has led to a growing need for batteries with higher energy density, longer lifespan (including number of possible charging cycles of a secondary battery), and improved safety. Furthermore, the shift towards renewable energy sources such as solar and wind power has increased the need for energy storage systems, making batteries an essential technology in the transition to a low-carbon economy.

Due to the importance of batteries, there is a high demand to improve the efficiency and lifespan of batteries, including the battery electrodes (i. e. the anode or the cathode). Battery electrodes are conductive materials that serve as the positive and negative terminals in a battery.

Secondary batteries are based on the principle of moving metal ions as charge carriers from a cathode to an anode and vice versa. These secondary batteries experience a loss of these ions in the first charging step of the formation often referred to as first cycle efficiency. If left uncompensated the loss of metal ions causes a lower gravimetric and volumetric energy density and therefore worsens key characteristics of the secondary battery cell.

This loss is due to the formation of protective layers on the active material. These so-called SEI (solid electrolyte interface) are essential for the function of the cell as they prevent the penetration of electrolyte molecules into the anode material.

Accordingly, pre-metalation of the anodes has been proposed as a way to compensate for the consumption of metal ions in irreversible reactions during the formation of the solid electrolyte interface layer in the initial cycling. By introducing additional metal of the charge carrier species, the consumption of the solid electrolyte interphase may be compensated, leading to improved battery performance.

US2021184208A1 relates to methods and systems for the deposition and processing of lithium metal in energy storage devices. In one implementation, an integrated processing tool for the deposition and processing of lithium metal in energy storage devices. The integrated processing tool may be a web tool. The integrated processing tool may comprises a reel-to-reel system for transporting a continuous sheet of material through the following chambers: a chamber for depositing a thin film of lithium metal on the continuous sheet of material and a chamber for depositing a protective film on the surface of the thin film of lithium metal. The chamber for depositing a thin film of lithium metal may include a PVD system, such as an electron-beam evaporator, a thin film transfer system, or a slot-die deposition system. The chamber for depositing a protective film on the lithium metal film may include a chamber for depositing an interleaf film or a chamber for depositing a lithium-ion conducting polymer on the lithium metal film.

EP2786441B1 relates to a method for lithiation of an intercalation-based anode or a non-reactive plating-capable foil or a reactive alloy capable anode, whereby utilization of said lithiated intercalation-based anode or a plating-capable foil or reactive alloy capable anode in a rechargeable battery or electrochemical cell results in an increased amount of lithium available for cycling, and an improved reversible capacity during charge and discharge.

US11183683B2 is directed to a method for pre-lithiation of negative electrodes during lithium loaded electrode manufacturing for use in lithium-ion capacitors. There is provided a system and method of manufacture of LIC electrodes using thin lithium film having holes therein, and in particular, to the process of manufacturing lithium loaded negative electrodes for lithium-ion capacitors by pre-lithiating electrodes with thin lithium metal films, wherein the thin lithium metal films include holes therein, and the lithium loaded negative electrodes are manufactured using a roll-to-roll lamination manufacturing, process. Further methods of electrode pre-lithiation are known from e.g. US11211205B2, US11329312B2.

Kim et.al. further describes a controlled Prelithiation method of Silicon Monoxide for High Performance Lithium-Ion Rechargeable Full Cells, cf. Kim HJ, Choi S, Lee SJ, Seo MW, Lee JG, Deniz E, Lee YJ, Kim EK, Choi JW. Controlled Prelithiation of Silicon Monoxide for High Performance Lithium-Ion Rechargeable Full Cells. Nano Lett. 2016 Jan 13;16(1):282-8. doi: 10.1021/acs.nanolett.5b03776. Epub 2015 Dec 24. PMID: 26694703.

### SUMMARY OF THE DISCLOSURE

Currently, it remains desirable to provide a method of obtaining a metalated electrode, wherein the metalation process becomes faster and more reliable.

Therefore, the present disclosure relates to a method of obtaining a metalated electrode for an energy storage device.

The method comprises providing a layer assembly.

The layer assembly comprises:
- an electrode (e.g. an electrode foil),
- a first separator layer on top of the electrode, the first separator layer comprising a first separator, and
- a first source layer on top of the first separator layer, the first source layer comprising a first metal.

The electrode is electrically conductive and comprises a first electrode material being electrically conductive and being different from the first metal.

The first separator is permeable for metal ions of the first metal.

The first source layer is electrically conductive.

The method further comprises electrically connecting the first source layer to the electrode by means of a first current control unit,

The method further comprises providing an agent comprising a solvent and metal ions of the first metal, the metal ions being dissociated in the solvent, and metalating the electrode.

The electrode is metalated by:
- causing a flow of metal ions of the first metal into the electrode by exposing the layer assembly to the agent,
- while controlling an electrical current between the first source layer and the electrode by means of the first current control unit.

The method further comprises removing the metalated electrode from the agent.

By providing such a method, the process of metalation of the electrode can be optimized for an energy storage device e.g. a secondary battery or a metal ion capacitor. In particular, the metalation rate can be increased and at the same time can be better controlled, as explained in the following description in more detail. Hence, the metalation process becomes faster and more reliable.

Accordingly, it becomes possible to add metal ions to the electrode based on the migration of metal ions (e. g. Li⁺, Na⁺, K⁺, Mg²⁺, Ca²⁺, Al³⁺) before the first charge in order to increase the capacity and lifetime of the final battery cell, e. g. by using suitable solvents, salts and/or metal-organyls in the agent. Metalating the electrode before the first charge may also be referred to as pre-metalating. Metalating the electrode may comprise pre-metalating.

Furthermore, the loss of these ions due to side reactions, e. g. the formation of protective layers on the active material (i. e. the SEI), can be compensated for by introducing additional metal ions into the battery electrode (e. g. the anode) using e.g. a wet chemical process (i. e. by exposing the electrode to the agent) prior to cell assembly. Through this compensation, the usable capacity of the final battery cell can be increased.

In addition, a reservoir of ions can be created that can be consumed over the life of the battery cell, improving the cycling stability of the battery cell.

The method of the present disclosure provides the following further advantages in view of conventional methods.

As compared to conventional metalation methods, as e.g. disclosed in US20210184208A1, the agent (e.g. an electrolyte) significantly increases the metalation (e.g. lithiation) rate, since it provides an ion-conducting media to all of the electrode (e.g. anode) surfaces it comes into contact with. Thus, a several-hours long reaction time established for the "dry" process is no more required. The reaction in the agent (e.g.electrolyte media) can finish as fast as e.g. 10 min, e.g. when a good wetting is achieved.

Furthermore, as compared to conventional metalation methods, as e.g. disclosed in US20210184208A1, since the reaction is not limited only to the electrode (e.g. Li-anode) contact surface, heat build-up can be more evenly distributed. In addition, the agent (e.g. liquid electrolyte) provides good dissipation of heat.

Furthermore, as compared to conventional metalation methods, as e.g. disclosed in US20210184208A1, evenly distributed reaction facilitates homogeneous pre-metalation (e.g. pre-lithiation). This helps avoid inhomogeneous formations on the electrode (e.g. anode) surface, which is typically observed in the "dry" process.

Furthermore, as compared to conventional metalation methods, as e.g. disclosed in US20210184208A1, since the metalated electrode is removed from the agent, it can go through rinsing process, unreacted Li metal, passivation layer Li2CO3, and release layer metal oxides, as well as the products of side reactions (LiOH, L2O, etc.) can be removed from the electrode (e.g. anode) surface. This further improves the quality of the (pre-)metalated (e.g. pre-lithiated) electrode and ensures that unwanted chemicals do not end up in the final energy storage device.

Beside this, as compared to other conventional electrochemical or electrolysis methods, as e.g. disclosed in EP2786441B1, the metalation reaction is spontaneous and does not require any external electric input. The pre-metalation (e.g. lithiation) rate can be conveniently controlled by varying the current control unit, e.g. a resistance of a shortcircuit.

Furthermore, as compared to conventional electrolysis methods, as e.g. disclosed in EP2786441B1, no side-chemicals are produced. This relates to both solvent decomposition and anionic reactions. The only chemical reactions taking place may be the consumption of metallic Li and reaction of Li⁺ ions with the electrode. In addition, external potential applied in e.g. EP2786441B1 necessitates the use of organic solvents that are electrochemically stable at this voltage window, which are scarce. Most of such solvents cannot dissolve Li salts in high quantities, have high boiling points, and so on. This significantly complicates the overall process. Standard Li- ion battery solvents described in this invention can provide pre-metalation quality similar to the outcome of the chemical reactions in the formation cycle. In contrast the method of the present disclosure can further help to achieve improved SEI formation. Furthermore, specific additives can be added to the agent (e.g. an electrolyte bath) to improve SEI formation.

In addition, in method of the present disclosure the external shorting (i.e. controlling the electrical current via the current control unit) gives a simple means of controlling the pre-lithiation rate. In contrast, conventional uncontrolled local high reaction rates can cause uneven pre-lithiation degrading the overall product quality, generate local heat.

As compared to usage of Li metal in bulk form as in other conventional methods, cf. also e.g. US11183683B2, US11211205B2, US11329312B2, and Kim et.al.), passivated metal (e.g. Li) thin film is significantly safer to handle under dry room conditions. In addition, the process described in this invention does not activate the Li thin film up until the point of actual usage, significantly improving the safety during unintended stoppage of the process during running. Furthermore, the invention disclosed intends to use the Li thin film completely, meaning that no Li-metal-containing waste is generated.

The electrode may comprise an electrode metal layer and a first electrode layer on top of the electrode metal layer.

The first electrode layer may comprise the electrode material.

The electrode metal layer may comprise a metal that is different from the electrode material.

The first separator layer may be on top of the first electrode layer.

Causing the flow of metal ions may comprise: causing the flow of metal ions into the first electrode layer.

The first source layer may comprise a first metal layer and a first substrate layer. The first metal layer may be on top of the first separator layer. The first substrate layer may be on top of the first metal layer. The first metal layer may comprise the first metal. The first substrate layer may comprise a metal different from the first metal.

The method may comprise: controlling a metalation rate and/or extent of the electrode by controlling the electrical current between the source layer and the electrode by means of the first current control unit.

The layer assembly may comprise:
- a second separator layer on top of the electrode, opposite to the first separator layer, the second separator layer may comprise a second separator,
- a second source layer on top of the second separator layer, the second source layer may comprise the first metal.

The second separator may be permeable for metal ions of the first metal.

The second source layer may be electrically conductive.

The method may further comprise:
electrically connecting the second source layer to the electrode by means of a second current control unit.

Metalating the electrode may further comprise:
- causing a flow of metal ions of the first metal into the electrode by exposing the layer assembly to the agent,
- while controlling an electrical current between the second source layer and the electrode by means of the second current control unit.

Providing the layer assembly may comprise:
- forming an electrode-separator assembly, comprising the electrode and the first separator layer, by bringing the first separator layer into contact with the electrode, and
- bringing the first source layer into contact with the electrode-separator assembly and thereby forming the layer assembly.
Optionally, the electrode-separator assembly may further comprise the second separator layer.
Optionally, the electrode-separator layer assembly may be formed by bringing the first separator layer and the second separator layer into contact with the electrode.
The method may further comprise: bringing the second source layer into contact with the electrode-separator assembly and thereby forming the layer assembly.

The layer assembly may be exposed to the agent without applying an external voltage between the electrode and the first source layer and/or the second source layer.

The layer assembly may be exposed to the agent for a predetermined amount of time.

Exposing the layer assembly to the agent may comprise: moving the layer assembly through a bath comprising the agent, optionally along a plurality of rolls in the bath.

The solvent may be an anhydrous organic solvent.

The metal may be at least one of Lithium, sodium, potassium, magnesium, calcium and aluminium and wherein the agent may comprise dissolved metal salt of the metal.

Optionally, the solvent may comprise one or more of: butylene carbonate, propylene carbonate, ethylene carbonate, vinylene carbonate, vinyl ethylene carbonate, dimethyl carbonate, diethyl carbonate, dipropyl carbonate, methyl ethyl carbonate, acetonitrile, gamma-butyrolactone, triglyme, tetraglyme, dimethylsulfoxide, dioxolane, sulfolane, room temperature ionic liquids.

Optionally, the metal salt may be a Li salt selected from LiF, LiCl, LiBr, LiPF6, LiClO4, Organolithium salts and/or mixtures thereof.

Optionally, the agent may comprise LiClO4 in acetontril or in dimethyl carbonate.

The method may further comprise, after removing the metalated battery electrode from the agent, removing:
- the first substrate layer,
- the first separator layer,
- optionally the second substrate layer and
- optionally the second separator layer.

The method may further comprise, after removing the metalated electrode from the agent, exposing the layer assembly to a rinsing solvent and/or drying the layer assembly.

The present disclosure further relates to a method of producing an energy storage device, such as a battery cell or metal ion capacitor. The method may comprise obtaining a metalated electrode as described above.

The present disclosure further relates to a metalated electrode obtained by a method of obtaining a metalated electrode as described above.

The present disclosure may also relate to an energy storage device, e.g. a battery cell, comprising a metalated electrode as described above.

The present disclosure further relates to a system for metalating an electrode. The system may comprise:
a bath of agent, wherein the agent may comprise a solvent and metal ions dissociated in the solvent.
Optionally, the system may be configured to perform the method of obtaining a metalated electrode as described above.

The technology provided by the present disclosure may be applied in various types of batteries such as lithium-ion secondary batteries. Other compatible examples of batteries may be sodium-ion batteries, potassium-ion batteries, magnesium-ion batteries, calcium-ion batteries or aluminum-ion batteries. The technology provided by the present disclosure may also be applied in various types of metal ion capacitors, such as lithium-ion capacitors.

It is intended that combinations of the above-described elements and those within the specification may be made, except where otherwise contradictory.

It is to be understood that both the foregoing general description and the following detailed description are exemplary and explanatory only, are provided for illustration purposes and are not restrictive of the disclosure, as claimed.

The accompanying drawings, which are incorporated in and constitute a part of this specification, illustrate examples of the disclosure and together with the description, and serve to support and illustrate the principles thereof.

### BRIEF DESCRIPTION OF THE DRAWINGS

Fig. 1 shows a flowchart of a method 100 of obtaining a metalated electrode according to examples of the present disclosure.
Fig. 2 schematically shows a layer assembly 200 useable in the method 100 of Fig. 1.
Fig. 3 schematically shows a first exemplary manufacturing system 300a for obtaining a metalated electrode in the method 100 of Fig. 1.
Fig. 4 schematically shows the metalation process 400 according to examples of the present disclosure.
Fig. 5 schematically shows a second exemplary manufacturing system 300b for obtaining a metalated electrode in the method 100 of Fig. 1.

### DESCRIPTION OF THE DRAWINGS

Reference will now be made in detail to examples of the disclosure, examples of which are illustrated in the accompanying drawings. Wherever possible, the same reference numbers will be used throughout the drawings to refer to the same or like parts.

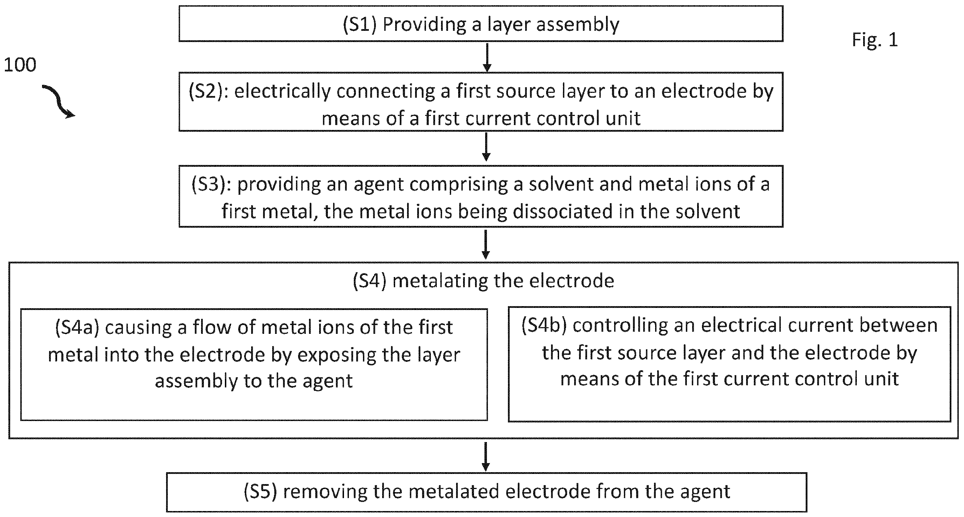

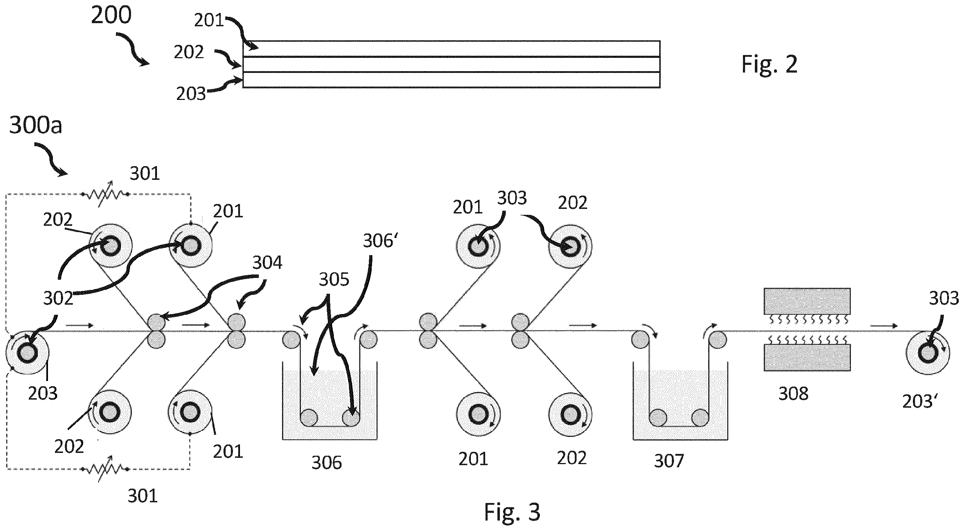

Fig. 1 shows a flowchart of a method 100 of producing (or more generally: of obtaining) a metalated electrode according to examples of the present disclosure. Fig. 2 schematically shows a layer assembly 200 as useable in the method 100 of Fig. 1. Fig. 2 schematically shows a layer assembly 200 as useable in the method 100 of Fig. 1.

In a first step S1 a layer assembly is provided. For example, the layer assembly comprises:
- an electrode (e.g. an electrode foil) 203, also referred to as a pristine electrode,
- a first separator layer 202 on top of the electrode, the first separator layer comprising a first separator, and
- a first source layer 201 on top of the first separator layer, the first source layer comprising a first metal.

The electrode 203 is electrically conductive and comprises a first electrode material being electrically conductive and being different from the first metal. The first separator 202 is permeable for metal ions of the first metal.

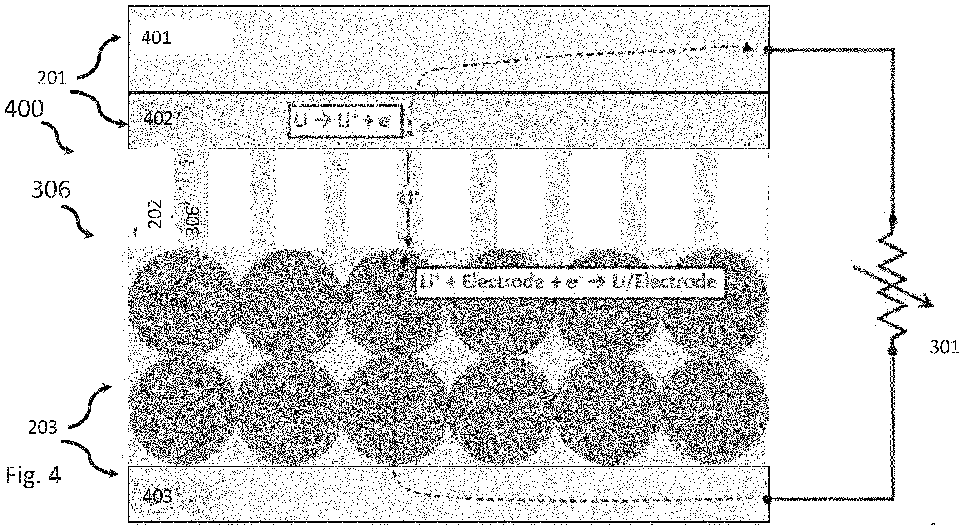

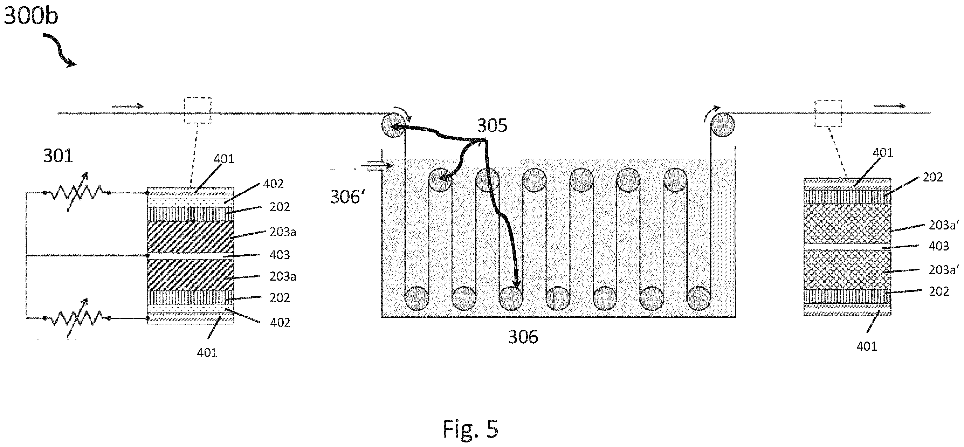

The first source layer 201 is electrically conductive. The first source layer may comprise a first metal layer 402 and a first substrate layer or base foil 401 (cf. fig. 4 and 5). The first metal layer may be on top of the first separator layer. The first substrate layer may be on top of the first metal layer. The first metal layer may comprise the first metal. The first substrate layer may comprise a metal different from the first metal.

The layer assembly may be provided by unwinding each layer (i.e. the electrode, the first separator and the first source layer). Accordingly, the system 300a may comprise respective coils or rolls 302 on which the layers are wound, and a device for unwinding the electrode foil (not shown in fig. 2). The unwound layers may be calendered or assembled (with or without pressure) by rolls 304 to form the layer assembly.

The layers, in particular the pristine electrode foil, may be any kind of material sheets or other thin structures like a thin film or a thin layer. The foil may have any thickness and shape. The foil may, for example have a round or a rectangular shape.

The metalated electrode may be or may be suitable to serve as an anode or a cathode of a battery cell.

The metalated electrode may be a sheet of material that is useable as one of the electrodes in a battery. The electrode may comprise any kind of material that may be suitable as battery electrode. The electrode foil 203 may itself comprise a plurality of layers, e. g. a base foil 403 inside and on one or both (outer) sides an electrode coating layer 203a (cf. also fig. 4 and 5).

For example, the base foil may be made from a conductive metal such as copper or aluminum to serve as a current collector for the electrode. Other examples of materials that may be used in the base foil (i. e. to form the base foil) may include nickel-coated copper foil, aluminum-coated copper foil, stainless steel foil, copper-zinc alloy foil. The material of the base foil may be chosen to guarantee a good electrical conductivity, high thermal stability, and low resistance.

The electrode coating layer may, for example, comprise silicon and/or carbon material, metal oxides or phosphates and/or other conversion or intercalation materials feasible for secondary batteries. For example, the battery electrode foil may comprise a silicon suboxide-carbon (SiOx/C, 1 ≤ x ≤ 2) composite. The silicon suboxide-carbon (SiOx/C, 1 ≤ x ≤ 2) composite is just one example of a material that may be used. Accordingly, an active material may be applied to one or both sides of the base foil, i. e. to form the electrode coating layer. Exemplary active materials may contain but are not limited to metal oxides (lithium cobalt oxide, lithium manganese oxide, lithium nickel manganese cobalt oxide(NMC), lithium vanadium oxide), phosphates (lithium iron phosphate, and/or lithium manganese iron oxide (LMFP)), Prussian blue and/or mixtures thereof on the cathode side (i. e. in case the battery electrode shall serve as a cathode), and/or carbon materials (e. g. graphite, hard carbon), silicon-based materials (silicon, silicon oxide, silicon carbide), titanates, sulfur-based compounds (sulfides, sulfur-polymer-gels), and/or mixtures thereof on the anode side (i. e. in case the battery electrode shall serve as an anode).

More generally expressed, the layer assembly may be provided by forming an electrode-separator assembly 203, 202, comprising the electrode 203 and the first separator layer 202, by bringing the first separator layer into contact with the electrode, and bringing the first source layer 201 into contact with the electrode-separator 203,202 assembly and thereby forming the layer assembly.

As shown in fig. 3 and also in fig. 5, the layer assembly may be symmetrical. Accordingly, the layer assembly may comprise (cf. fig. 5):
- a second separator layer 202 on top of the electrode 203, opposite to the first separator layer, the second separator layer may comprise a second separator,
- a second source layer 201 on top of the second separator layer, the second source layer may comprise the first metal 402.

In a step S2 the first source layer 201 is electrically connected to the electrode 203 by means of a first current control unit 301 (cf. fig. 3). Steps S1 and S2 may also be performed in another order, e.g. simultaneously or S2 before S1. For example, an electrical connection may be established between the coil of the first source layer 201 and the coil of the electrode 203. Accordingly, it is not necessary to provide any electrical contact at the moving layers or in the pre-metalation bath 306, what can be difficult or less reliable.

In a step S3 an agent 306' comprising a solvent and metal ions of the first metal is provided. The metal ions are dissociated in the solvent, and metalating the electrode. The agent may be provided in the electrolyte bath 306. The agent may also be referred to as an electrolyte.

The electrolyte may comprise any anhydrous organic solvent and dissolved Li salt. Typical examples of a non- aqueous solvents are butylene carbonate, propylene carbonate, ethylene carbonate, vinylene carbonate, vinyl ethylene carbonate, dimethyl carbonate (DMC), diethyl carbonate, dipropyl carbonate, methyl ethyl carbonate, acetonitrile (CH3CN), gamma-butyrolactone, triglyme, tetraglyme, dimethylsulfoxide, dioxolane, sulfolane, room temperature ionic liquids and mixtures thereof. The Li salt can be selected from LiF, LiCl, LiBr, LiPF6, LiClO4, Organolithium salts and mixtures thereof. A desirable combination for this method may be 1.5 M LiClO4 in CH3CN, or 1-2 M LiClO4 in DMC. Both DMC and acetonitrile have advantages of being inexpensive, volatile, and only moderately toxic. Volatility improves the subsequent drying process, and the lower toxicity limits the health and environment hazards. LiClO4 has sufficient solubility in CH3CN and DMC, and is stable towards water, which eliminates the need for anhydrous handling conditions for hazardous LiPF6.

Again, Steps S1 to S3 may also be performed in another order, e.g. simultaneously or S3 before S1 and/or S2. The layer assembly may be guided into and through the bath 306 via one or several rolls 305.

In the bath the electrode is metalated by causing a flow of metal ions of the first metal into the electrode 203 by exposing the layer assembly to the agent 306'. At the same time, in the bath an electrical current between the first source layer 201 and the electrode 203 is controlled by means of the first current control unit 301.

Since the layer assembly may pass through the bath with a controlled speed, the layer assembly may be exposed to the agent for a predetermined amount of time. Accordingly, the amount of metalation may also be controlled by the speed of the layer assembly and the path length within the bath (cf. fig 5. where the path length has been increased).

The method may further comprise removing the metalated electrode from the agent, such that further optional steps can be performed, before the metalated electrode is further processed, in order to produce e.g. a battery.

For example, the method may further comprise, after removing the metalated battery electrode from the agent, removing the first substrate layer 401 and the first separator layer 202. Accordingly, waste separator 202 and substrate 401 may be removed from the assembly and rewound. Depending on the waste disposal regulations, the separator and substrate may be rinsed in a solvent bath (not shown in fig. 2) before being rewound.

The method may further comprise exposing the layer assembly to a rinsing solvent 307 and/or drying the layer assembly with a drying device 308. Accordingly, the metalated electrode may be transferred into rinsing bath 308, where a countercurrently flowing fresh solvent may remove the metal salt and any unwanted chemicals (e.g., Li2CO3) from the electrode. The solvent may be the same one used in the electrolyte bath 306, or any other solvent that can provide sufficient solubility of the chemical species mentioned above. Rinsed solvent may be refreshed using ionexchange columns and re-used in the rinsing (cf. solvent entry 306' in fig. 5).

Then the electrode may pass through an in-line drying unit 308, where volatile solvent may be removed.

Finally, the metalated electrode may be rewound for further use in a cell assembly. Alternatively or in addition, an electrode cutting unit may be implemented into the system at this location.

Fig. 4 schematically shows the metalation process 400 according to examples of the present disclosure.

In this example the electrode may be referred to as an anode and the first metal may be referred to as Lithium. However, also other options are possible, as described in the present disclosure.

The present disclosure provides a method to pre-lithiate Li-ion battery electrodes in a roll-to-roll electrochemical process using Li thin-film with passivation layer deposited onto a metal foil subtrate.

The process takes advantage of the spontaneity of the reaction between Li metal and Li-ion battery electrodes. Thus, the electrochemical process does not require any electricity input. Oppositely, a current control unit (simplified as variable resistor) is used to limit the current flow and control the rate of the pre-lithiation.

An electrode 203 may be aligned with a separator 202 and a Li/substrate foil 401, 402 (in the given order) from each side. The Li/substrate foil 401, 402 may placed so that Li-coated side faces towards the electrode foil. A passivated Li thin-film (e-g- of 1-20 µm) may be deposited on a sheet of material 402, which may in some examples be a conductive foil.

A passivated Li thin film can be stable under dry room conditions (-40°C DP) and should not cause safety issues during handling. The passivation layer, which is typically e.g. Li2CO3, does not have to be removed from the Li film, and should not have effect on the pre-lithiation process disclosed in present disclosure. The substrate 401 may be a conductive material, i.e., a metal, to enable short-circuiting the Li 402 and electrode 203 in the pre-lithiation process. Examples of metals that the substrate may be comprised of include aluminum (Al), copper (Cu), zinc (Zn), nickel (Ni), cobalt (Co), tin (Sn), silicon (Si), manganese (Mn), magnesium (Mg), alloys thereof, and combinations thereof.

The layer assembly comprising an electrode foil 203 / separator 202 / Li 402 / substrate 401 is passed through an electrolyte bath 306. In the electrolyte bath, Li metal oxidizes and liberates Li+ ions into electrolyte. Since the separator 202 may be porous, the electrolyte (i.e. agent 306') may enter the porous separator and thus allow the Li+ ions to pass the separator. At the same time, Li+ ions from the electrolyte 306' reduce the anode forming a lithiated anode. The electrons of the two half-reactions are transferred in a controlled current by the external circuit of the current control unit 301. This circuit may hence be used to short-circuit the metal foils of Li/substrate and electrode foil.

Thus, a metalation rate may be controlled by controlling the electrical current between the source layer and the electrode by means of the first current control unit.

The reaction between Li and the electrode (namely the anode) is spontaneous, and can proceed on its own. Thus, the layer assembly may be exposed to the agent without requiring an external voltage. For example, cell potential between Li and Si anodes is >0.25 V. A current control unit 301, e.g. a variable resistor, in the external circuit may be used to control the current flow and pre-lithiation rate, i.e. by increasing the resistance the rate can be slowed down. Hence, overheat generation and quality of the pre-lithiation can be controlled. Exact choice of resistance values may depend on factors such as bulk resistivity of the electrolyte, electrolyte-electrode e.g. interfacial resistance, Li-electrolyte interfacial resistance, and others. Although slower pre-lithation rates tend to give better results, this rate may be increased to up to a 2C- rate without significant negative impact on the electrode quality. Thus, a typical bath time (i.e., reaction time) may have a duration of e.g. 1 to 10 minutes for intended pre-lithiation degrees from 5 to 30% in an ideal equipment (i.e., 100% yield). In such q case, if, for example, the process speed is 100 m/h, then up to 17 m of the electrode may be required to be in the electrolyte bath at any given time.

To account for this, the electrode foil/separator/Li/substrate assembly may make several turns in the electrolyte bath to increase the path length and thus provide sufficient time for the reaction, as shown in the example of fig. 5.

Fig. 5 schematically shows a second exemplary manufacturing system 300b for obtaining a metalated electrode in the method 100 of Fig. 1. Again, in this example the electrode may be referred to as an anode and the first metal may be referred to as Lithium. However, also other options are possible, as described in the present disclosure.

The example of fig. 5 may principally correspond to that one of fig. 3, wherein the path length of the layer assembly in the bath 306 has been increased by guiding it along several offset rolls 305'.

Thus, the bath dimensions can be significantly decreased to a few meters. Additional several minutes can be needed to provide sufficient time for wetting of the porous electrode and separator. The pre-lithiation is intended to run until the Li thin film wholly reacts with the electrode. Thus, ideally, the process does not produce Li waste, and the only waste of the Li/substrate is leftover substrate, which is a stable metal foil (see above). In case of mismatch between the Li thin film thickness of the supplied Li/substrate and the intended electrode pre-lithiation degree, pre-slit Li/substrate roll (narrower) can be used.

For example, 10-pm-thick Li thin film may pre-lithiate an electrode of the same area with an areal capacity of 4 mAh / cm² up to pre-lithiation degree of 20%. If the intended degree of the pre-lithiation of the same electrode is e.g. 10%, then a Li/substrate slit to half of the electrode width can be used. Pre-lithiated anode leaving the electrolyte bath will continuously remove some liquid from the bath, and fresh electrolyte may be added into the bath to compensate for the loss. For example, assuming that electrolyte is mainly removed in the pores of the electrode foil and separator, and taking typical porosities and thicknesses of the electrode and the separator, e.g. 50 mL of electrolyte may be expected to be removed for every 1 m² of passing electrode assembly.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Although the present disclosure herein has been described with reference to particular examples, it is to be understood that these examples are merely illustrative of the principles and applications of the present disclosure.

It is intended that the specification and examples be considered as exemplary only, with a true scope of the disclosure being indicated by the following claims.

## Claims

1. A method of obtaining a metalated electrode for an energy storage device, the method comprising:
providing a layer assembly, the layer assembly comprising:
• an electrode,
• a first separator layer on top of the electrode, the first separator layer comprising a first separator, and
• a first source layer on top of the first separator layer, the first source layer comprising a first metal,
wherein the electrode is electrically conductive and comprises a first electrode material being electrically conductive and being different from the first metal,
wherein the first separator is permeable for metal ions of the first metal,
wherein the first source layer is electrically conductive,
wherein the method further comprises:
electrically connecting the first source layer to the electrode by means of a first current control unit,
providing an agent comprising a solvent and metal ions of the first metal, the metal ions being dissociated in the solvent, and
metalating the electrode by:
• causing a flow of metal ions of the first metal into the electrode by exposing the layer assembly to the agent,
• while controlling an electrical current between the first source layer and the electrode by means of the first current control unit,
wherein the method further comprises: removing the metalated electrode from the agent.

2. The method according to claim 1,
wherein the electrode comprises an electrode metal layer and a first electrode layer on top of the electrode metal layer,
wherein the first electrode layer comprises the electrode material,
wherein the electrode metal layer comprises a metal that is different from the electrode material,
wherein the first separator layer is on top of the first electrode layer, and wherein causing the flow of metal ions comprises: causing the flow of metal ions into the first electrode layer.

3. The method according to claim 1 or claim 2, wherein the first source layer comprises a first metal layer and a first substrate layer, the first metal layer being on top of the first separator layer, the first substrate layer being on top of the first metal layer, the first metal layer comprising the first metal, the first substrate layer comprising a metal different from the first metal.

4. The method according to any one of the preceding claims, wherein the method comprises:
controlling a metalation rate and/or extent of the electrode by controlling the electrical current between the source layer and the electrode by means of the first current control unit.

5. The method according to any one of the preceding claims, wherein the layer assembly comprises:
• a second separator layer on top of the electrode, opposite to the first separator layer, the second separator layer comprising a second separator,
• a second source layer on top of the second separator layer, the second source layer comprising the first metal,
wherein the second separator is permeable for metal ions of the first metal,
wherein the second source layer is electrically conductive,
wherein the method further comprises:
electrically connecting the second source layer to the electrode by means of a second current control unit,
wherein metalating the electrode further comprises:
• causing a flow of metal ions of the first metal into the electrode by exposing the layer assembly to the agent,
• while controlling an electrical current between the second source layer and the electrode by means of the second current control unit.

6. The method according to any one of the preceding claims,
wherein providing the layer assembly comprises:
• forming an electrode-separator assembly, comprising the electrode and the first separator layer, by bringing the first separator layer into contact with the electrode, and
• bringing the first source layer into contact with the electrode-separator assembly and thereby forming the layer assembly,
wherein optionally, the electrode-separator assembly further comprises the second separator layer, and
wherein optionally, the electrode-separator layer assembly is formed by bringing the first separator layer and the second separator layer into contact with the electrode, and
wherein optionally, the method further comprises: bringing the second source layer into contact with the electrode-separator assembly and thereby forming the layer assembly.

7. The method according to any one of the preceding claims, wherein the layer assembly is exposed to the agent without applying an external voltage between the electrode and the first source layer and/or the second source layer.

8. The method according to any one of the preceding claims, wherein the layer assembly is exposed to the agent for a predetermined amount of time.

9. The method according to any one of the preceding claims, wherein exposing the layer assembly to the agent comprises: moving the layer assembly through a bath comprising the agent, optionally along a plurality of rolls in the bath.

10. The method according to any one of the preceding claims,
wherein the solvent is an anhydrous organic solvent, wherein the metal is at least one of Lithium, sodium, potassium, magnesium, calcium and aluminium and wherein the agent comprises dissolved metal salt of the metal, wherein optionally, the solvent comprises one or more of: butylene carbonate, propylene carbonate, ethylene carbonate, vinylene carbonate, vinyl ethylene carbonate, dimethyl carbonate, diethyl carbonate, dipropyl carbonate, methyl ethyl carbonate, acetonitrile, gamma-butyrolactone, triglyme, tetraglyme, dimethylsulfoxide, dioxolane, sulfolane, room temperature ionic liquids, wherein optionally, the metal salt is a Li salt selected from LiF, LiCl, LiBr, LiPF₆, LiClO₄, Organolithium salts and/or mixtures thereof,
wherein more optionally, the agent comprises LiClO4 in acetontril or in dimethyl carbonate.

11. The method according to any one of the preceding claims, wherein the method further comprises, after removing the metalated battery electrode from the agent, removing:
• the first substrate layer,
• the first separator layer,
• optionally the second substrate layer and
• optionally the second separator layer.

12. The method according to any one of the preceding claims, wherein the method further comprises, after removing the metalated electrode from the agent, exposing the layer assembly to a rinsing solvent and/or drying the layer assembly.

13. A method of producing an energy storage device, such as a battery cell, the method comprising:
obtaining a metalated electrode according to any one of the preceding claims.

14. A metalated electrode obtained by a method according to any one of claims 1 to 12.

15. A system for metalating an electrode, the system comprising:
a bath of agent, wherein the agent comprises a solvent and metal ions dissociated in the solvent,
wherein optionally, the system is configured to perform the method according to any one of claims 1 to 12.
